# EUROPEAN PATENT APPLICATION

(11) **EP 2 520 875 A1**
(43) Date of publication of application: **07.11.2012**
(21) Application number: 10840619.0
(22) Date of filing: 23.07.2010
(51) Int. Cl.: F24J 2/38, F24J 2/52

(54) **DEVICE FOR ORIENTING SOLAR PANELS OR OTHER ELEMENTS USING MOVEMENT OF THE CENTRE OF GRAVITY**

(30) Priority: 29.12.2009 ES 200931293; 29.12.2009 ES 200931292
(71) Applicant: Soluciones Energeticas, S.A., 28021 Madrid (ES)
(72) Inventor: VELA VICO, Antonio, E-28021 Madrid (ES)
(74) Representative: Urizar Anasagasti, Jesus Maria
(86) International application number: PCT/ES2010/070508
(87) International publication number: WO 2011/080367

(57) **Abstract**

Device for assembly of photovoltaic panels, provided or not with Zenithal/Azimuthal solar tracker, comprising a fork (2) or fastening structure in "H" or other arrangement, the ends of which define an axis of horizontal rotation for the panel (4), which includes a counterweight (7) that moves varying the center of gravity of the set, so that the concerned panel or set inclines changing the angle to reach the maximum use of sunlight or points the specified direction, although allowing that when strong winds blow, all the panel or set turns or swings towards a position of minimal resistance to the wind in balance with it, reorienting itself again when the force of the wind decreases in intensity.

## Description

Orientation device for solar panels or other elements through displacement of the center of gravity.

### Object of the invention

The present invention relates to the device for the assembly of a photovoltaic panel or another element in a pole or staff, so that it can swing around a horizontal axis when receiving the wind, without restriction to the movement by stops or limit switches, ensuring the electrical connection, when required, through a circular collector with electrical contacts through slip rings and brushes to be able to rotate around its axis unrestricted without ruining the connection cables.

This device is ideal to carry out the assembly of photovoltaic panels in height, for example on top of street lights, traffic or self-contained illuminated signs, on which until now there are usually placed one or more panels, oriented to the sun, controlled by a solar tracker that moves them according to a polar axis and an Azimuthal axis, or simply inclined the appropriate grades for, without the need of a tracker that varies the orientation of the panel, obtaining the maximum performance of the solar radiation at any time of the year.

The invention is intended first of all for achieving minimizing the effects of strong, very strong and gusty winds and gusts, allowing when they occur, the free rotation of the panel or set of panels, such that it has the less wind-resistant surface, therefore decreasing the pressure transmitted to the support with everything that it entails with regard to reduction of materials, manufacturing and assembling costs, in resistant and foundation elements.

The main objective of the invention consists of the one or two axis tracker counterweighted by a mass, in which the set and the mass balance their relative position against the common center of gravity. This simplifies the manufacture of the motorized set and its inclination and twist control, needing a reduced consumption of energy to perform its movements, based on the motorized displacement of the own mass, which leads to a variation of the center of gravity of the set and therefore the degree of inclination of the solar panel.

### Background of the invention

The trackers that allow the movement of the solar panel to follow on a daily basis the height that the sun reaches above the horizon, with a view to achieving a good use of solar radiation, include more or less complicated mechanical solutions based on motors, the power of which increases in direct relation to the number of panels to be handled, and speed reducing mechanisms, that decrease, due to their power consumption, the performance of the installations.

On the other hand, this type of installations are sensitive to strong or very strong sudden winds that arise in the place due to atmospheric phenomena capable of generating strong gusts of moderate duration or short duration but very high intensity microgusts, or also due to special meteorological circumstances such as a sudden drop in atmospheric pressure in the area or in its vicinity, and other various phenomena, which end up producing damage in installations involving incidents by broken gear wheels and transmissions, burning of electric motors, or the total or partial destruction of the solar panels or its supporting structure due to deformations or detachments of their anchorages.

It has been observed that not only the installations located at ground level suffer damage due to these causes, but the streetlights, advertising masts and poles including solar panels fitted with this type of one axis trackers, or permanently fixed, suffer to a greater extent onslaught from these winds, without currently existing an effective means for preventing it.

In order to remedy this situation, some trackers allow arranging the panel in position according to the direction of the wind when strong wind blows. However, firstly, the assembly of the panel has to allow placing it at the position of minimum resistance, which issue is completely impossible in most of the currently existing devices, and secondly, the displacement of the panel to said horizontal position should be made quickly and, if possible, favored by the action of the wind itself, which is not always possible with the current solutions.

### Description of the invention

The device of the invention reduces the wind stresses on a solar panel, enabling it to carry out a swinging according to a horizontal axis, so that as the force of the wind increases, the surface of the panel or panels located between the support fork decreases, so the bending moment that is generated in the pole is reduced when the thrust decreases by reducing the resistant surface.

This device can be made up of an arm by way of a "U" or "T "-shaped fork the base of which is anchored or attached to the existing street light or pole. It has an axis of horizontal rotation for the panel or set of panels, attached to a counterweight that facilitates their orientation, tilting the panel or set backward or forward; this inclination can be a precalculated angle, in the case of manual adjustment for a fixed system, or it may be determined by a hotspot solar tracking electronics or similar, in the case of motorization of the counterweight, to achieve perpendicularly directing to the sun the largest possible area in the case of a solar panel, or the needed latitude or azimuth through calculation of a control electronics, all of it in conditions of absence of wind.

However, if the wind increases its strength, the panel begins to turn to its position of least resistance, presenting increasingly less effective surface of opposition to the prevailing wind, which decreases the pressure put on the panel or set. With very strong winds or gale, the panel takes a position parallel to the direction of the same, making the effort of the wind on minimum and therefore the bending moment.

In addition, the arrangement of the modules may not be symmetrical in order to achieve the own panel or set to provide a weather vane effect, moving in such a way that the two axes are aeolically compensated.

It must be noted that, despite the fact that the set allows the rotation of the panel, this movement is not intended to increase the radiation of the sun according to its position in the sky throughout the day, but the initial inclination in its position at rest with zero or very mild winds, varies according to the force of the wind until reaching the position of least resistance in order that the panel has increasingly less surface as the speed of the wind increases, which enables achieving reducing the bending moment, when the set swings as if it was a "Roman" type balance.

Although, in the future and for reasons of simplification, we shall refer to a single panel installed on the "U", or "T" or "H"-shaped fork, this, suitably reinforced, can contain several panels or other applications such as a parabola or a domestic parasol, etc.

A second objective of this invention consists of achieving a very cheap one or two axes tracker since by simplifying the motorization of the solar height control, the dual purpose of requiring a low internal energy consumption and a lower mechanical cost is achieved, based on the motorized displacement of a mass, which leads to a variation of the distance to the center of gravity of the set, and consequently of the degree of inclination of the solar panel.

This invention also includes a system of viscous drag between motor and panel to avoid breakage, shock or noise in mechanics.

Joined to the panel, through a lath, or directly located in the framework, an electromechanical pile hammer is situated, which contains a small electric motor of low consumption which moves, linearly extending and retracting, a rod equipped with a counterweight calculated to produce a variation of the position of the center of gravity of the set formed by the panel, electromechanical pile hammer and lath; such that as the center of gravity moves away from the axis of horizontal rotation of the panel, it is situated in a more inclined towards the horizontal position, while if the counterweight is situated next to the axis of rotation of the panel, its position will be next to the vertical, not being essential for the patent the figure nor the accurate arrangement of the lever of the movement of the mass.

The counterweight displacement may also be made along a guide or slide located on the rear side of the panel or, as indicated previously moving it away or closer to the plane that defines the photovoltaic panel, or by a single or double joint.

In an alternative embodiment, the counterweight is mounted on a rod that is hinged in the back of the panel and moves through a cylinder.

In any of the above cases varying the position of said counterweight for changing the center of gravity of the set is achieved and thus varying the angle of inclination of the panel, all of this commanded by manual, mechanical or electronic control (for example the case of a parasol) associated to the tracker. Even the plane or a parabola could be moved with a single mass in both axes.

It has been envisaged that the position of the counterweight and that the backward panel swinging angle are such that, as the strength of the wind increases, it is capable in the farthest position of placing the panel in a position parallel to the direction of the wind, minimizing the pressure exerted by the wind on the panel in any circumstance. To avoid that the panel can swing turning backwards making a full turn, which is unlikely, the bottom end of the panel could be attached via a cable to the fixing base of the same, the length of it defining the maximum backwards inclination of the panel so that it does not exceed beyond measure the horizontal.

Depending on the time and environmental circumstances, the operation of the tracker is as follows:
- Using a solar sensor situated throughout the mobile set, or by position sensors opportune signals are sent to a microcontroller, which, in turn, sends the precise orders to the motor or motors in order to displace the counterweight, such that the center of gravity of the panel and its additions is thus varied, producing the rotation of the same in sufficient quantity. In this way it is achieved that the plane is as perpendicular as possible with respect to the sun for maximum use of the radiation incident on it according to the hours of the day.
- The main spindle motor is responsible for orientating the set pointing it towards the sun, or to the extent required, as it could be for use in the mounting of a radio telescope.
- Once the hours of sunlight have ended, a routine incorporated into the program that acts in the memory of the microcontroller, returns the panel, always through the variation of the center of gravity, to the initial angle that can be perpendicular plane to the ground, anti-vandal or the corresponding to the sunrise of the next day as defined by the user, and puts all the electronics in a very low or non-existent consumption standby.
- During the hours of daylight, the sum of consumption of the electromechanical pile hammer motor and the electronics is estimated at a few Watts per day.

The invention offers great advantages over the conventional trackers, which are: low consumption of energy, simplicity and mechanical robustness; and immunity against the pressure exerted by strong and very strong winds, so it can be applied in all cases of outdoor installations, in which greater solar production with respect to the fixed panels is desired or reduction of the stresses transmitted to the supports in those cases in which moderate, strong or very strong winds cause a problem on support structures and foundations such as:
- Street lights with solar panels.
- Poles of advertising posters located in roads, highways, freeways and expressways.
- Generation of photovoltaics on rooftops of buildings and roofs.
- Telecommunication base stations located in hardly accessible places without the possibility of connection to the electrical distribution network.
- Civil and military radar installations, Tacan, VOR and DME stations.
- Radio telescopes.
- Parasols and umbrellas.
- Towers of forest fire monitoring.
- Shelters and high mountain facilities.
- Farms and agricultural facilities.
- Replacement of metal structures and trusses anchored to the ground in solar orchards by solar panels with one or two axes spinners.
- Other installations that need to avoid the effect of the wind.

### Description of the figures

To complete the description that is being carried out and in order to facilitate the understanding of the features of the invention, the present specification is accompanied by a set of drawings wherein with illustrative character and without limitation, the following has been represented:
- Figure 1: It shows a general view of a solar panel equipped with this assembling device, in a non-motorized version, allowing its inclination in favor or against the wind.
- Figure 2: It shows a general view of a solar panel, equipped with the tracker of the invention, motorized version, with its various components.
- Figures 3, 4 and 5: Show different positions adopted by the solar panel according to the movement of the counterweight which controls its inclination.
- Figure 6: It shows a profile strobe view of the movement caused by the action of the displacement of the mass located in the rod of the electro-mechanical pile hammer.
- Figure 7: Is a view of a set containing three solar panels (4).
- Figures 8 and 9 show different positions of a solar panel in which the counterweight (7) moves through the slide (8).
- Fig. 10. It is an elevational side view of a solar panel in which the counterweight (7) moves through a cylinder (12) that rotates the rod (6).
- Figure 11: It shows two elevational views of a "T" head that allows transmitting motion in inclination and azimuth to a panel or set of panels, large sized.

### Preferred embodiment of the invention

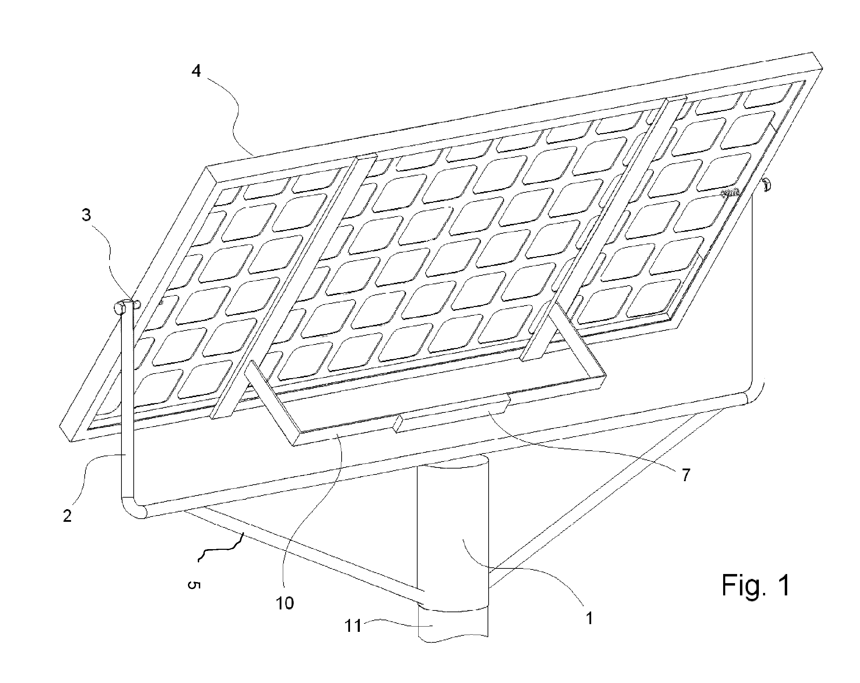

The set of this panel and device for assembly of the same in Figure 1 consists of a base cylinder (1) which has fixing screws strategically located in the perimeter of its surface, allowing anchoring all the system at the upper end of the staff of the street light, or already existing fixed pole (11). From the base cylinder and towards the fork (5), two tubular structures that allow the placement of the panel or set centered on the mast have been fixed.

A fork-shaped tubular structure formed in vertical "U" (2) is coupled to said base cylinder (1), at the two upper ends of which are located two fastening pieces (3) that function as rotation axes and confer on the framework of the panel (4) greater resistance. The iron plates are placed above the line connecting the middle points of the minor sides of the panel framework (4) if it is positioned initially in oblong position or of the major sides, if the initial situation of the panel is vertical, so that the major mass of the same is below or above the line that binds the rotation axes and creating, in this way, a torque against the pressure exerted by the wind on the panel.

As shown in Figure 1, this panel incorporates in the rear part a counterweight (7) in this case mounted on a "U"-shaped rear bar, placed in its central part. In this case the counterweight is fixed and its sole purpose is to increase the mass in a calibrated way, so that the total weight of the counterweight is suitable to detach the panel from its vertical and take it to the angle chosen to the sun in resting position in the absence of thrusts external to the system, forcing it, through the variation of the mass center, to acquire the degrees with respect to the horizontal plane which conform to the latitude of the installation geographic location of the set for greater use of solar radiation.

A flexible cable of sufficient resistance (9) optionally completes the constituent set of this invention which, attached by one end to the cylindrical base and the center of the bottom edge of the panel, by the other, prevents the panel from turning a full turn, regardless of the direction of the rotation.

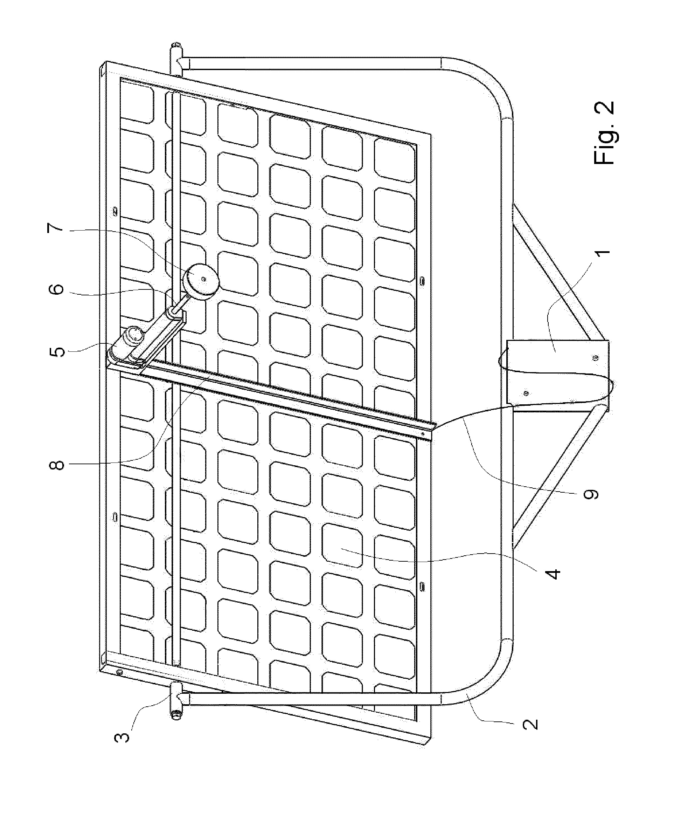

As shown in figures 2 onwards, the solar panel (4) is placed on the axis (3) turning freely, but with a tendency to adopt a tilted position with respect to the vertical plane since it has a counterweight (7) on the rear side and the top which, based on its further or closer position to said axis (3) will incline more or less the panel (4).

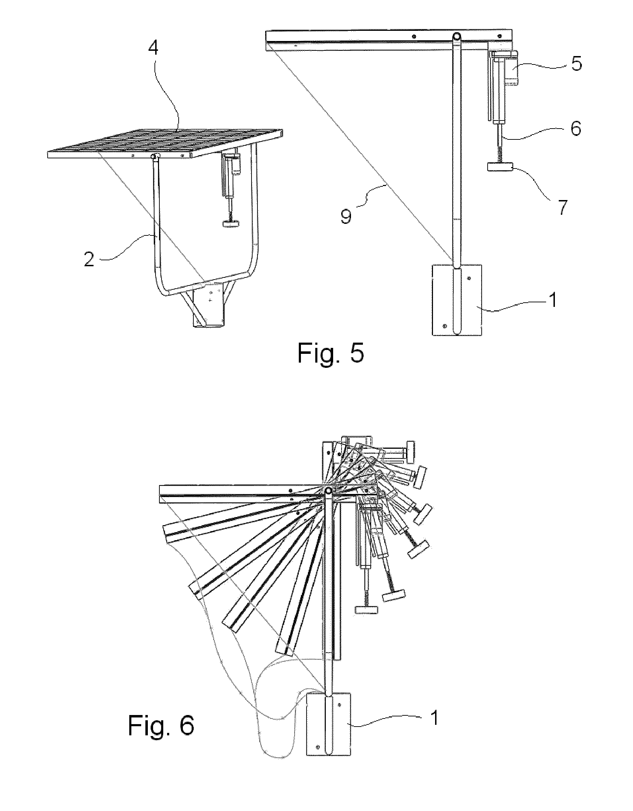

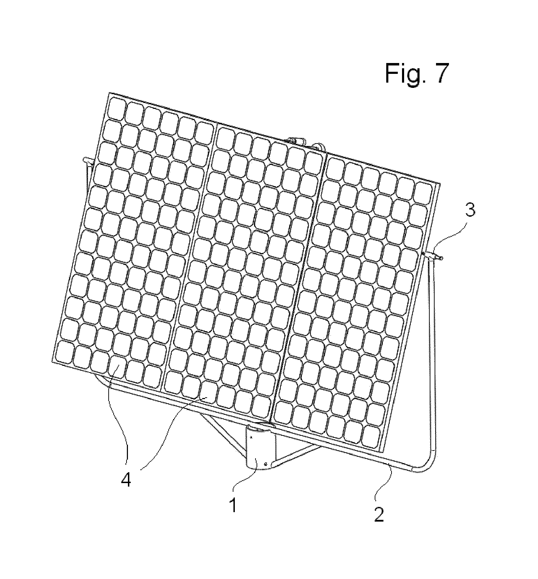

In particular in figures 2 to 7 this counterweight (7) is mounted at the end of a mobile rod (6) on an axis, by means of a small motor (5), forming together an electro-mechanical pile hammer that is mounted on the top-rear part of the panel, so that at all times it takes at least a slight inclination of the panel toward the sun with respect to the vertical plane, as viewed from the front or useful part, and allows moving the counterweight (7) such that, when the rod is in a retracted position, the panel (4) adopts the position corresponding to that of maximum use of sunlight as determined by the study of the application, and as the panel unfolds it will increasingly tilt to be able to adopt a horizontal or near horizontal position, thus allowing minimizing the profile resistant to the thrust of the wind.

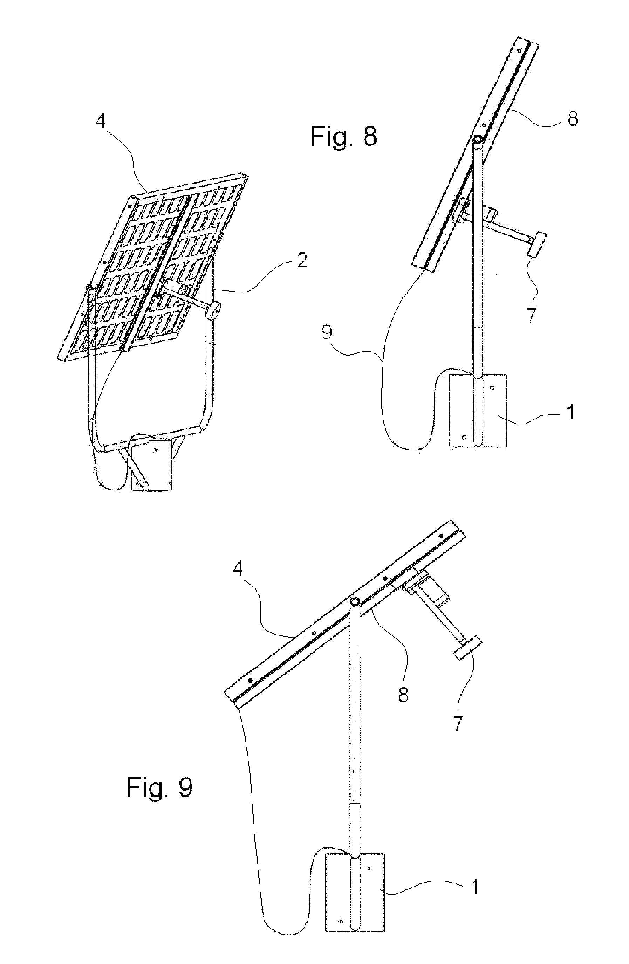

In an alternative solution, shown in figures 8 and 9, the counterweight is also mounted on the rear top or bottom of the panel, situated on a profile that connects the top and bottom crossbar of the frame (4), so that when the counterweight varies its position, the panel adopts a position of greater or lesser inclination with respect to the vertical plane, minimizing the thrust transmitted to the structure.

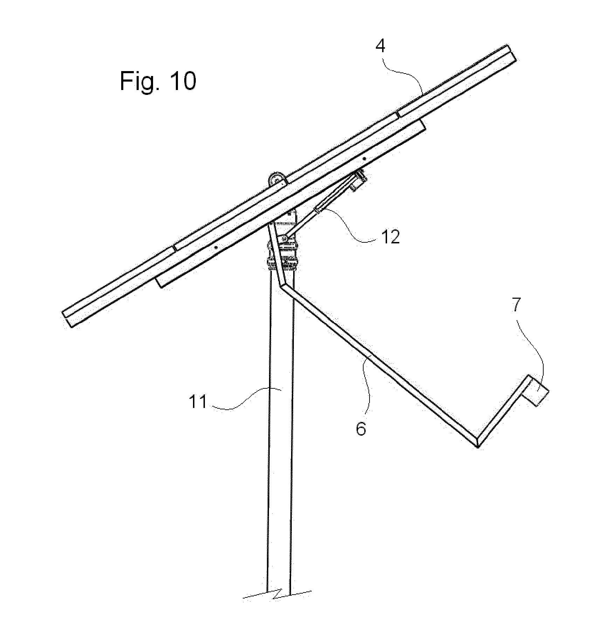

In Figure 10, the counterweight is mounted on the bottom-rear part of the panel at the end of a rod (6) which is hinged on the back of the solar panel (4) and moved through a mechanism, such as e.g. a cylinder or linear motor (12) that varies the position of said counterweight (7), in order to change the center of gravity of the set and thus vary the angle of inclination of the panel. An arrangement of this kind would make it possible to include a set of panels to an already existing mast, such as for example to add panels to a street light at the desired height, without having to disassemble the luminaire or causing over-thrusts to its foundation.

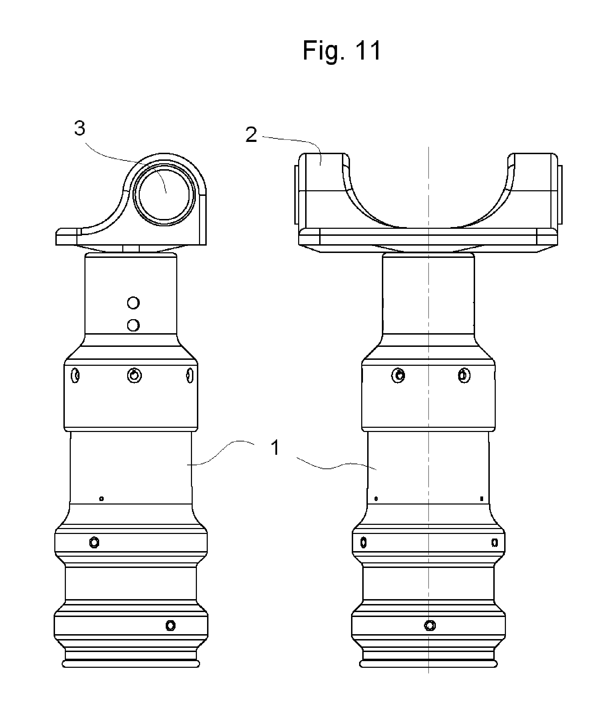

In Figure 11 the fork (2) has been replaced by a head that has the same function of allowing mounting on a horizontal axis (3) a panel or set of panels, to which a motion in inclination and azimuth is transmitted through a motorized or not viscous coupling, to enable that in case of receiving external stresses, the set freely adopts the profile of minimum resistance until the external thrust ceases, moment in which the device itself will once again lead the panel or set to the desired position. Cables pass through the interior of the device through a hole provided for this purpose on the rotation axis without being affected by this.

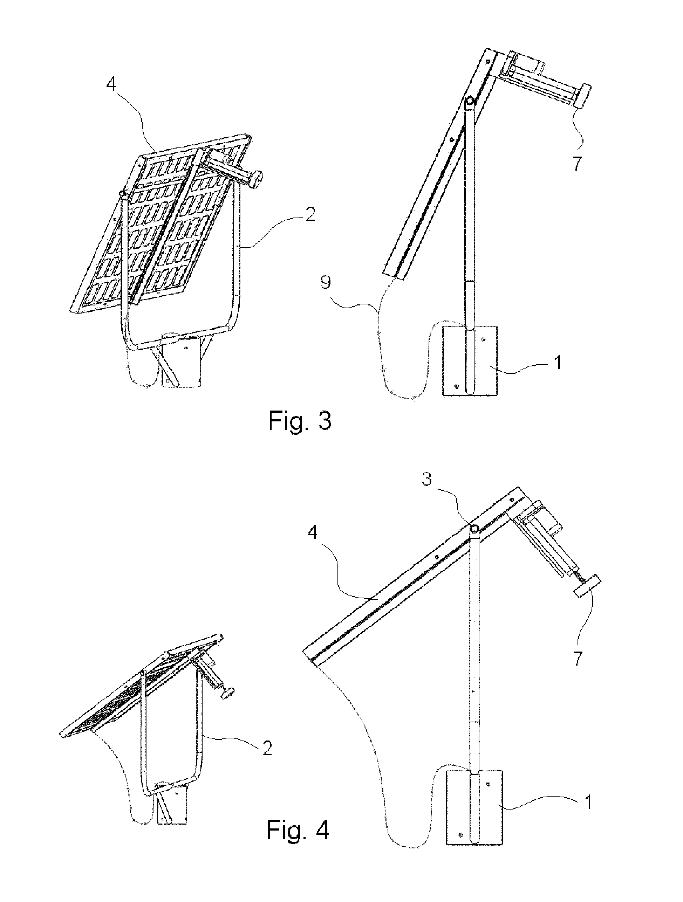

During the day, the panel (4) adopts a position with a suitable inclination so that the maximum solar irradiation is obtained, controlled by a solar sensor associated with an electronic microcontroller, while the wind is not blowing or it is blowing in moderation. If the wind increases its strength, the panel (4) turns towards its position of least resistance, having increasingly less effective surface to the prevailing wind and this decreases the effort being exerted on it. With very strong winds or gale, or at night, the panel takes a position of minimum resistance depicted in Figure 4. The set can be equipped with a small anemometer, accelerometer or any other device capable of measuring the wind speed or pressure if necessary, although this is not essential, as long as it is required to indicate to the micro controller the presence of strong or very strong winds.

## Claims

1. Orientation device for solar panels or other elements through displacement of the center of gravity, comprising an anchoring base (1) to the staff of a street light or pole on which it is fixed and optionally rotates according to a polar axis being oriented to the sun commanded by an electronic tracker, said base (1) comprising an arm (2) by way of fork, the ends (3) of which define an axis of horizontal rotation for the panel (4), **characterized in that** the panel (4) includes a counterweight (5) on its rear part, which is situated in such a way that the center of gravity of the set is below its rotation axis, so that the panel is placed by its own weight oriented with certain inclination according to an angle corresponding to the latitude of the installation place to optimize solar radiation received in conditions of absence of wind, but when the wind increases and pushes the surface of the panel, on the front or the back, leads to the inclination of the panel (4) to the position of minimum resistance, automatically repositioning again when the wind ceases due to the counterweight (5) to its initial position.

2. Device, according to claim 1, **characterized in that** the counterweight attached to the panel (4) moves through an electronic control, moving away and approaching the center of gravity of the set to the horizontal rotation axis (3) of the panel, such that it is situated in a more or less inclined to the horizontal position depending on the distance of the counterweight (7) with respect to the axis of rotation of the panel.

3. Device, according to claims 1 and 2, **characterized in that** said counterweight (7) is situated in the rear or front top or bottom part of the panel, in a pile hammer containing a small hydraulic, combined or of another type electrical motor (5), which moves, linearly or not extending and retracting a rod (6) at the end of which said counterweight (7) is mounted, which is estimated to produce a variation of the position of the center of gravity of the set formed by the panel, pile hammer from a slightly inclined backwards position to the horizontal.

4. Device, according to claims 1 and 2, **characterized in that** the counterweight which leads to inclination in a greater or lesser extent of the solar panel (4) is mounted in a guide or slide (8) located on the rear side of the panel and moves through it with the help of a small electric motor, in order to change the position of the center of gravity of the set and thus vary the inclination angle of the panel.

5. Device, according to claims 1 and 2, **characterized in that** the counterweight which leads to a greater or lesser inclination of the solar panel (4) is mounted on a rod (6), which is hinged on the rear part of the panel and moves by means of a cylinder (12) varying the position of said counterweight (7), in order to change the center of gravity of the set and thus vary the inclination angle of the panel.

6. Device, according to previous claims, **characterized in that** the associated electronic control provides the displacement of the counterweight so that it causes the swinging of the panel backwards, as the force of the wind increases, and this counterweight is calculated such that in the farthest position it is capable of placing the panel (4) in position of least resistance, minimizing the effort exerted by the wind on the panel in any circumstance.

7. Device, according to previous claims, **characterized in that** the bottom end of the panel (4) is joined via a resistant cable (9) to the base (1), the length of this cable delimiting the maximum inclination of the panel (4), in a way that it does not make full turns.
